# EUROPÄISCHE PATENTANMELDUNG

(11) **EP 3 012 605 A1**
(43) Veröffentlichungstag der Anmeldung: **27.04.2016**
(21) Anmeldenummer: 15178557.3
(22) Anmeldetag: 28.07.2015
(51) Int. Cl.: G01K 1/08, G01K 5/62

(54) **TAUCHHÜLSE MIT EINEM ZEIGERTHERMOMETER UND MIT EINEM ELEKTRONISCHEN TEMPERATURFÜHLER**

(30) Priorität: 22.10.2014 DE 102014221407
(71) Anmelder: AFRISO-Euro-Index GmbH, 74363 Güglingen (DE)
(72) Erfinder: Heinz, Thomas, 74374 Zaberfeld (DE)
(74) Vertreter: Kohler Schmid Möbus Patentanwälte

(57) **Zusammenfassung**

Die erfindungsgemäße Tauchhülse (1) für ein Zeigerthermometer (4) und für einen elektronischen Temperaturfühler (7) zur Temperaturmessung in Heizungsanlagen umfasst ein erstes Tauchrohr (2) zur Aufnahme eines Fühlerschaftes (3) des Zeigerthermometers (4), ein zweites Tauchrohr (5) zur Aufnahme eines Fühlerschaftes (6) des elektronischen Temperaturfühlers (7) und einen Einschraubstutzen (8) mit einem Außengewindeabschnitt (9) und einem Mehrkantabschnitt (10), wobei die beiden parallel zueinander verlaufenden Tauchrohre (2, 5) jeweils einenends verschlossen sind und anderenends durch den Außengewindeabschnitt (9) hindurch in einen axial offenen Innenraum (11) des Mehrkantabschnitts (10) münden, über den die Fühlerschäfte (3, 6) in die Tauchrohre (2, 5) einführbar sind, und wobei der Mehrkantabschnitt (10) eine mantelseitige Öffnung (14) zum Herausführen der elektrischen Leitungen (13) des elektronischen Temperaturfühlers (7) aus dem Innenraum (11) nach außen aufweist.

## Beschreibung

Die vorliegende Erfindung betrifft eine Tauchhülse für ein Zeigerthermometer und für einen elektronischen Temperaturfühler zur Temperaturmessung in Heizungsanlagen.

Für die Temperaturmessung an Boilern oder anderen Messstellen sind in der Regel standardmäßige Einschraubmuffen mit einem Innengewinde am Boiler vorgesehen. In diese Innengewinde können dann Tauchhülsen für den Einbau von Standard-Bimetallthermometern (Zeigerthermometer) eingeschraubt werden. Aufgrund der Baugröße des Fühlerschaftes des Bimetallthermometers ist in der Regel der zur Verfügung stehende Freiraum in der Tauchhülse ausgeschöpft. Bei Heizungsanlagen, bei denen in der ursprünglichen Planung nur ein Bimetallthermometer vorgesehen war, ergibt sich bei einer notwendigen Um- bzw. Aufrüstung auf einen zusätzlichen elektronischen Temperaturfühler ein Platzproblem, denn in das vorhandene Innengewinde kann entweder die Tauchhülse für das Bimetallthermometer oder die Tauchhülse für einen elektronischen Temperaturfühler eingesetzt werden (z.B. bei künftig notwendigen Regelfunktionen). Daher müssen bisher am Boiler werksseitig mehrere Gewindemuffen zur späteren Anbringung von Tauchhülsen oder sonstigen Anschlüssen angebracht werden. Die Anzahl an Gewindemuffen verursacht Kosten und Aufwand in der Fertigung, da die Dichtheit der angeschweißten Gewindemuffen gewährleistet sein muss. Bei emaillierten Boilern müssen die Gewinde beim Beschichtungsprozess entsprechend abgedeckt sein, um die spätere Lauffähigkeit der Gewinde zu gewährleisten. Gleichzeitig werden für nachher nicht benötigte Anschlüsse entsprechende Blindverschlüsse benötigt, was zusätzlichen Aufwand und entsprechend höhere Kosten bedeutet.

Es ist demgegenüber die Aufgabe der Erfindung, eine Tauchhülse sowohl für ein Zeigerthermometer als auch für einen elektronischen Temperaturfühler bereitzustellen.

Diese Aufgabe wird erfindungsgemäß durch eine Tauchhülse für ein Zeigerthermometer und für einen elektronischen Temperaturfühler zur Temperaturmessung in Heizungsanlagen gelöst, aufweisend ein erstes Tauchrohr zur Aufnahme eines Fühlerschaftes des Zeigerthermometers und ein zweites Tauchrohr zur Aufnahme eines Fühlerschaftes des elektronischen Temperaturfühlers, und einen Einschraubstutzen mit einem Außengewindeabschnitt und einem Mehrkantabschnitt z.B. in Form eines Außen- oder Innensechskants, wobei die beiden parallel zueinander verlaufenden Tauchrohre jeweils einenends verschlossen sind und anderenends durch den Außengewindeabschnitt hindurch in einen axial offenen Innenraum des Mehrkantabschnitts münden, über den die Fühlerschäfte in die Tauchrohre einführbar sind, und wobei der Mehrkantabschnitt eine mantelseitige Öffnung zum Herausführen der elektrischen Leitungen des elektronischen Temperaturfühlers aus dem Innenraum nach außen aufweist.

Die erfindungsgemäß als Doppelrohr ausgeführte Tauchhülse ist in der Lage, die Fühlerschäfte eines (analogen) Zeigerthermometer und eines elektronischen (digitalen) Temperaturfühlers aufzunehmen, so dass auch bei neuen Boilern oder Installationen mit einer einzigen Anschlussmuffe oder einer einzigen Messstelle immer zwei Temperaturmessungen (analog + digital) erfolgen können. Die Tauchhülse ist dabei so gestaltet, dass sich ihre beiden Tauchrohre im Bereich des zu messenden Medienstroms befinden und dennoch nur einen sehr geringen Strömungswiderstand aufweist. Die für die Leitungszuführung des elektronischen Temperaturfühlers vorgesehene mantelseitige Öffnung im Mehrkantabschnitt ermöglicht es, das Zeigerthermometer vollständig bis zur Anlage seiner Gehäuserückseite am Mehrkantabschnitt in die Tauchhülse einzuschieben.

Besonders vorteilhaft ist die Tauchhülse ein einteilig geformtes Metallteil aus kostengünstigem Material, wie z.B. aus Messing (Pressteil oder Schmiedeteil), mit sehr guter Wärmeleitfähigkeit, wodurch der mechanische Nachbearbeitungsaufwand an der Tauchhülse relativ gering ist. Alternativ kann die Tauchhülse auch mehrteilig aus einem Einschraubstutzen und zwei Rohrstücke hergestellt sein, welche in den Einschraubstutzen eingelötet oder eingeschweißt sind.

Länge und Durchmesser der Tauchrohre entsprechen jeweils den aufzunehmenden Fühlerschaftlängen und -durchmessern des Zeigerthermometers und elektronischen Temperaturfühlers und sind in der Regel unterschiedlich. Vorteilhafterweise sind die Tauchrohre auf der Länge des kürzeren Tauchrohrs miteinander verbunden, so dass sie eine gemeinsame Rohrwandung aufweisen.

Wenn die mantelseitige Öffnung zum Rand des Mehrkantabschnitts hin offen ist, weist der Mehrkantabschnitt besonders vorteilhaft in Umfangsrichtung zu beiden Seiten der mantelseitigen Öffnung jeweils ein Loch für ein Halteband (insbesondere für einen Kabelbinder) auf, der die mantelseitige Öffnung des Mehrkantabschnitts überbrückt. Statt einer zum Außenrand hin offenen mantelseitigen Öffnung und eines durch Löcher hindurchgeführten Haltebandes kann der Mehrkantabschnitt auch eine Bohrung aufweisen, durch die hindurch die elektrischen Leitungen aus dem Innenraum nach außen geführt sind.

Die Erfindung betrifft auch eine wie oben beschriebene Tauchhülse mit einem Zeigerthermometer, dessen Fühlerschaft in das erste Tauchrohr eingesteckt ist, und mit einem elektronischen Temperaturfühler, dessen Fühlerschaft in das zweite Tauchrohr eingesteckt ist, wobei die elektrischen Leitungen des elektronischen Temperaturfühlers über die mantelseitige Öffnung des Mehrkantabschnitts aus dem Innenraum nach außen herausgeführt sind.

Vorteilhaft ist das Zeigerthermometer mit seinem Fühlerschaft soweit in das Tauchrohr eingesteckt, bis seine Rückseite am Rand des Mehrkantabschnitts anliegt.

Vorzugsweise weist der Mehrkantabschnitt in Umfangsrichtung zu beiden Seiten seiner sich zum Rand hin offenen mantelseitigen Öffnung jeweils Löcher auf, durch die ein Halteband wie z.B. ein Kabelbinder hindurchgeführt ist. Mithilfe des Haltebandes ist der elektronische Temperaturfühler - und damit auch das Zeigerthermometervor unbeabsichtigtem Herausziehen geschützt.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: die erfindungsgemäße Tauchhülse mit einem Bimetallthermometer und einem elektronischen Temperaturfühler im montierten Zustand (Fig. 1a) und in einer Explosionsansicht (Fig. 1 b);
- Fign. 2a, 2b: die Rückseite (Fig. 2a) und die Vorderseite (Fig. 2b) der in Fig. 1 gezeigten Tauchhülse;
- Fign. 3a, 3b: eine Seitenansicht (Fig. 3a) und eine perspektivische Ansicht (Fig. 3b) der in Fig. 1 gezeigten Tauchhülse ohne das Bimetallthermometer und ohne den elektronischen Temperaturfühler, und
- Fig. 4: die in Fig.3 gezeigte Tauchhülse mit dem elektronischen Temperaturfühler und einem Kabelbinder.

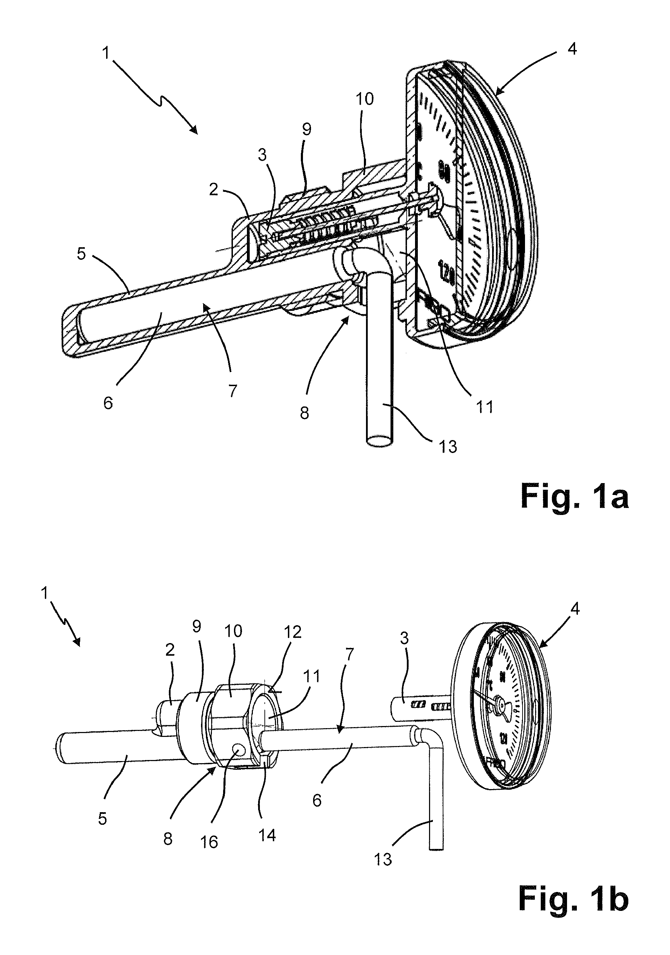

Die in **Fign. 1 bis 4** gezeigte Tauchhülse **1** dient zur Temperaturmessung in Heizungsanlagen und umfasst ein erstes Tauchrohr **2** zur Aufnahme eines zylindrischen Fühlerschaftes **3** eines als Bimetallthermometer ausgeführten Zeigerthermometers **4,** ein zweites Tauchrohr **5** zur Aufnahme eines zylindrischen Fühlerschaftes **6** eines elektronischen Temperaturfühlers **7** und einen Einschraubstutzen **8** mit einem Außengewindeabschnitt **9** und einem Mehrkantabschnitt **10.** Mithilfe eines am Mehrkantabschnitt 10 angreifenden Werkzeugs wird die Tauchhülse 1 mit ihrem Außengewindeabschnitt 9 in eine Gewindeöffnung eines Boilers o.ä. eingeschraubt. Im gezeigten Ausführungsbespiel ist der Mehrkantabschnitt 10 als Außensechskant ausgeführt, aber kann beispielsweise auch als Innensechskant ausgeführt sein.

Die beiden Tauchrohre 2, 5, die parallel zueinander verlaufen und auf der Länge des kürzeren Tauchrohrs 2 miteinander verbunden sind, sind jeweils einenends verschlossen und münden anderenends durch den Außengewindeabschnitt 9 hindurch in einen axial offenen Innenraum **11** des Mehrkantabschnitts 10. Die gesamte Tauchhülse 1 ist beispielsweise ein einteilig geformtes Pressteil oder Schmiedeteil aus Messing.

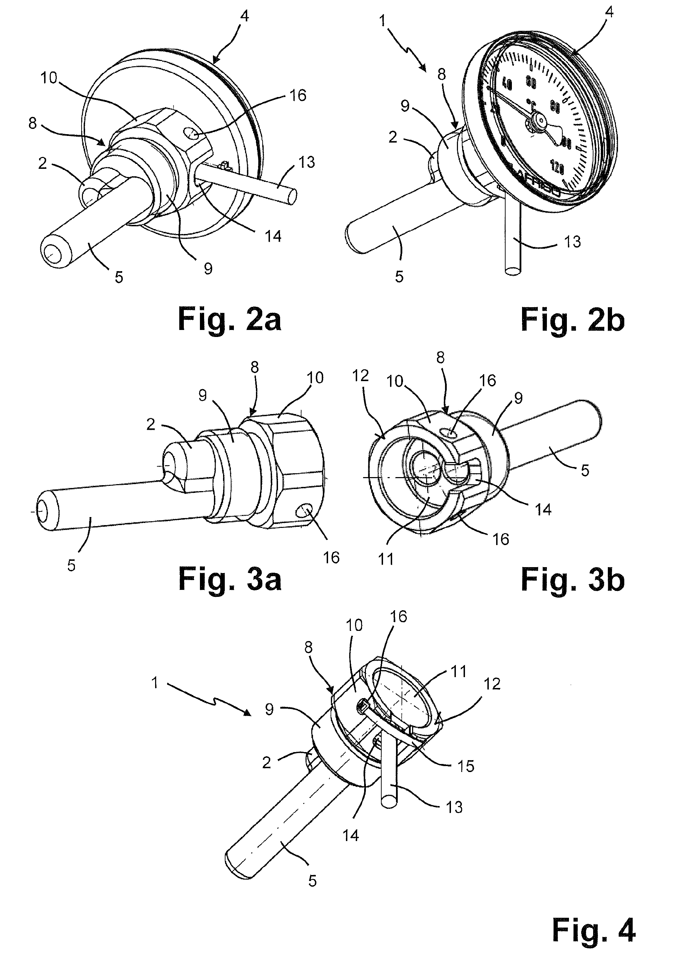

Das Zeigerthermometer 4 ist mit seinem Fühlerschaft 3 in das erste Tauchrohr 2 soweit eingesteckt, bis es mit seiner Rückseite am Außenrand **12** des Mehrkantabschnitts 10 anliegt. Der elektronische Temperaturfühler 7 ist mit seinem Fühlerschaft 6 vollständig in das zweite Tauchrohr 5 eingesteckt, wobei elektrische Leitungen **13** des elektronischen Temperaturfühlers 7 über eine mantelseitige Öffnung **14** des Mehrkantabschnitts 10 nach außen aus dem Innenraum 11 herausgeführt sind. Die mantelseitige Öffnung 14 ist zwar bis zum Außenrand 12 hin offen, aber die elektrischen Leitungen 13 des elektronischen Temperaturfühlers 7 sind in der mantelseitigen Öffnung 14 durch ein als Kabelbinder ausgeführtes Halteband **15** (Fig. 4) zurückgehalten, das durch zwei Löcher **16** des Mehrkantabschnitts 10 hindurchgeführt ist, welche in Umfangsrichtung des Mehrkantabschnitts 10 zu beiden Seiten der mantelseitigen Öffnung 14 angeordnet sind. Durch die mantelseitige Öffnung 14 ist es möglich, das Zeigerthermometer 4 vollständig bis zur Anlage seiner Rückseite am Außenrand 12 in die erste Tauchhülse 2 einzuschieben. Mithilfe des Kabelbinders 15 ist der elektronische Temperaturfühler 7 (einschließlich Zeigerthermometer 4) vor unbeabsichtigtem Herausziehen geschützt, wenn an den elektrischen Leitungen 14 gezogen wird.

## Patentansprüche

1. Tauchhülse (1) für ein Zeigerthermometer (4) und für einen elektronischen Temperaturfühler (7) zur Temperaturmessung in Heizungsanlagen, aufweisend:
ein erstes Tauchrohr (2) zur Aufnahme eines Fühlerschaftes (3) des Zeigerthermometers (4),
ein zweites Tauchrohr (5) zur Aufnahme eines Fühlerschaftes (6) des elektronischen Temperaturfühlers (7), und
einen Einschraubstutzen (8) mit einem Außengewindeabschnitt (9) und einem Mehrkantabschnitt (10),
wobei die beiden parallel zueinander verlaufenden Tauchrohre (2, 5) jeweils einenends verschlossen sind und anderenends durch den Außengewindeabschnitt (9) hindurch in einen axial offenen Innenraum (11) des Mehrkantabschnitts (10) münden, über den die Fühlerschäfte (3, 6) in die Tauchrohre (2, 5) einführbar sind, und wobei der Mehrkantabschnitt (10) eine mantelseitige Öffnung (14) zum Herausführen von elektrischen Leitungen (13) des elektronischen Temperaturfühlers (7) aus dem Innenraum (11) nach außen aufweist.

2. Tauchhülse nach Anspruch 1, **dadurch gekennzeichnet, dass** die Tauchhülse (1) ein einteilig geformtes Metallteil ist.

3. Tauchhülse nach Anspruch 1, **dadurch gekennzeichnet, dass** die beiden Tauchrohre (2, 5) durch zwei Rohrstücke gebildet sind, die mit dem Einschraubstutzen (8) verbunden, insbesondere eingelötet oder eingeschweißt sind.

4. Tauchhülse nach einem der vorhergehenden Ansprüche, **dadurch gekennzeichnet, dass** die Tauchrohre (2, 5) auf der Länge des kürzeren Tauchrohrs (2) miteinander verbunden sind.

5. Tauchhülse nach einem der vorhergehenden Ansprüche, **dadurch gekennzeichnet, dass** die Tauchrohre (2, 5) unterschiedliche Durchmesser und/oder Längen aufweisen.

6. Tauchhülse nach einem der vorhergehenden Ansprüche, **dadurch gekennzeichnet, dass** die mantelseitige Öffnung (14) bis zum Außenrand (12) des Mehrkantabschnitts (10) hin offen ist.

7. Tauchhülse nach einem der vorhergehenden Ansprüche, **dadurch gekennzeichnet, dass** der Mehrkantabschnitt (10) in Umfangsrichtung zu beiden Seiten der mantelseitigen Öffnung (14) jeweils ein Loch (16) aufweist.

8. Tauchhülse nach Anspruch 6 und 7, **dadurch gekennzeichnet, dass** die mantelseitige Öffnung (14) des Mehrkantabschnitts (10) durch ein Halteband (15) überbrückt ist, das durch die beiden Löcher (16) hindurchgeht.

9. Tauchhülse nach einem der vorhergehenden Ansprüche, **dadurch gekennzeichnet, dass** der Mehrkantabschnitt (10) ein Außen- oder Innensechskant ist.

10. Tauchhülse nach einem der vorhergehenden Ansprüche mit einem Zeigerthermometer (4), dessen Fühlerschaft (3) in das erste Tauchrohr (2) eingesteckt ist, und mit einem elektronischen Temperaturfühler (7), dessen Fühlerschaft (6) in das zweite Tauchrohr (5) eingesteckt ist, wobei die elektrischen Leitungen (13) des elektronischen Temperaturfühlers (7) über die mantelseitige Öffnung (14) des Mehrkantabschnitts (10) aus dem Innenraum (11) nach außen herausgeführt sind.

11. Tauchhülse nach Anspruch 10, **dadurch gekennzeichnet, dass** das Zeigerthermometer (4) an dem Außenrand (12) des Mehrkantabschnitts (10) anliegt.

12. Tauchhülse nach Anspruch 10 oder 11, **dadurch gekennzeichnet, dass** der Mehrkantabschnitt (10) in Umfangsrichtung zu beiden Seiten der bis zum Außenrand (12) hin offenen mantelseitigen Öffnung (14) jeweils ein Loch (16) aufweist und die elektrischen Leitungen (13) des elektronischen Temperaturfühlers (7) durch ein Halteband (15), das durch die beiden Löcher (16) hindurchgeführt ist, in der mantelseitigen Öffnung (14) zurückgehalten ist.

13. Tauchhülse nach einem der Ansprüche 10 bis 12, **dadurch gekennzeichnet, dass** das Zeigerthermometer (3) ein Bimetallthermometer ist.
